# FASCICULE DE BREVET EUROPEEN

(11) **EP 0 961 207 B1**
(45) Date de publication et mention de la délivrance du brevet: **31.07.2002**
(21) Numéro de dépôt: 99401228.4
(22) Date de dépôt: 21.05.1999
(51) Int. Cl.: G06F 15/80, G06F 13/376, H04L 12/413

(54) **Dispositif de communication entre un réseau neuronal et un système utilisateur par l'intermédiaire d'un bus**
Gerät zur Kommunikation zwischen einem Neuronalen Netzwerk und einem Benutzersystem über einen Bus
Device for communication between a neural network and a user system by means of a bus

(30) Priorité: 25.05.1998 FR 9806535
(43) Date de publication de la demande: 01.12.1999
(73) Titulaire: CSEM Centre Suisse d'Electronique et de Microtechnique S.A. Recherche et Développement, 2007 Neuchâtel (CH)
(72) Inventeur: Venier, Philippe, 1792 Cordast (CH)
(74) Mandataire: Colas, Jean-Pierre

(56) Documents cités:
- US-A- 4 652 873
- US-A- 4 755 990
- US-A- 5 065 153
- MORTARA A ET AL: "A COMMUNICATION SCHEME FOR ANALOG VLSI PERCEPTICE SYSTEMS" IEEE JOURNAL OF SOLID-STATE CIRCUITS, vol. 30, no. 6, 1 juin 1995 (1995-06-01), pages 660-669, XP000510117
- MARIENBORG J -T ET AL: "AN ANALOG APPROACH TO "NEUROMORPHIC" COMMUNICATION" 1996 IEEE INTERNATIONAL SYMPOSIUM ON CIRCUITS AND SYSTEMS (ISCAS) CIRCUITS AND SYSTEMS CONNECTING THE WORLD, ATLANTA, MAY 12 - 15, 1996, vol. 3, 12 mai 1996 (1996-05-12), pages 397-400, XP000688877 INSTITUTE OF ELECTRICAL AND ELECTRONICS ENGINEERS

## Description

La présente invention est relative à un dispositif de communication entre un réseau neuronal d'un système perceptif et un système utilisateur par l'intermédiaire d'un bus de communication sur lequel doit transiter de l'information sous forme d'impulsions asynchrones engendrées à partir de signaux analogiques produits par les neurones du réseau.

Un système perceptif artificiel utilisant un réseau neuronal est décrit dans un article de Mortara et al. paru dans la revue IEEE Journal of Solid State Circuits, Vol 30, N°6, juin 1995.

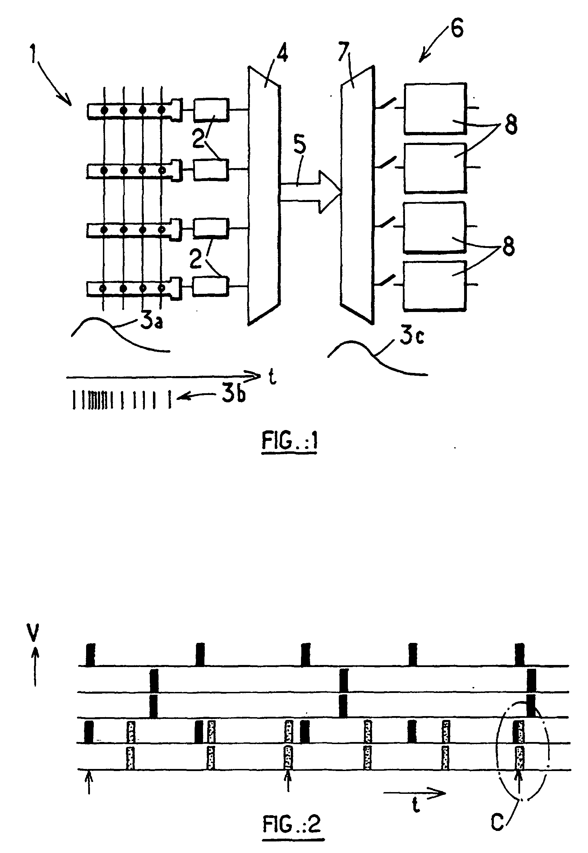

Les figures 1 et 2 des dessins annexés reproduisent la figure 1 de cet article.

Les neurones artificiels d'un réseau 1 sont associés à des convertisseurs courant/fréquence 2 qui rendent compte de l'activité des neurones. En 3a est symbolisée l'activité d'un neurone laquelle, par exemple, peut être représentée par une grandeur analogique (courant ou tension) variable au cours du temps. Cette activité est convertie, par le convertisseur 2, en une suite d'impulsions 3b dont la fréquence est proportionnelle à l'amplitude de la grandeur analogique. Les sorties des convertisseurs 2 sont appliquées, à travers le codeur 4, au bus de communication 5 selon un code spécifique à chaque neurone. La figure 2 montre l'activité de trois neurones codée sur les cinq fils du bus 5, à savoir : sur les premier et quatrième fils pour le premier neurone (code 10010), sur les deuxième et troisième fils pour le deuxième (code 01100) et sur les quatrième et cinquième fils pour le troisième (code 00011).

Le bus de communication 5 conduit à un circuit d'utilisation 6 plus ou moins éloigné du réseau 1. Ce circuit comprend un décodeur 7 et des accumulateurs d'activité 8, chaque accumulateur rétablissant le signal d'activité du neurone auquel il est associé, comme cela est illustré en 3c.

Dans l'article précité, on décrit donc une méthode de multiplexage qui diffère des méthodes de multiplexage habituelles en ce qu'elle ne consiste pas à balayer cycliquement tous les neurones. Au contraire, lorsqu'une impulsion engendrée par l'activité d'un neurone doit être transmise, elle accède directement au bus de manière asynchrone en envoyant son adresse dans le réseau sur le bus. Par conséquent, le nombre moyen d'impulsions envoyées par un neurone est proportionnel à son activité. Cette méthode de multiplexage a l'avantage que les neurones les plus actifs peuvent disposer de la plus grande partie de la bande passante du bus ce qui conduit à une réponse plus rapide du système.

Il est clair que dans ces conditions, suivant l'excitation du réseau (par exemple par de la lumière si le réseau est optiquement sensible), deux neurones ou davantage peuvent devoir accéder au bus en même temps. C'est ce qui est illustré à droite de la figure 2 où des impulsions propres aux neurones ayant respectivement les codes de rangée 10010 et 00011 coïncident dans le temps à un moment qui est mis en évidence par la ligne en traits mixtes C.

On voit donc que, sans précautions particulières, si tous les neurones ont accès au bus sans aucune restriction, il s'ensuit des risques de "collision". Certes, un choix judicieux des codes d'adresse des neurones permet d'éviter des erreurs d'adressage, mais d'une part cela restreint le nombre de codes utilisables et d'autre part cela n'empêche pas de telles collisions, leur probabilité augmentant d'ailleurs avec l'augmentation de l'activité totale des neurones et de la largeur des impulsions.

Du point de vue des performances du réseau, les collisions engendrent une atténuation non désirée du signal transmis, et une incertitude sur le signal reçu (bruit).

Pour éviter ces problèmes et améliorer les performances du dispositif de communication, on doit donc avoir recours à un système d'arbitrage d'accès au bus de transmission.

Un tel système d'arbitrage peut être celui décrit dans un article de J. Lazzaro et al. intitulé "Silicon auditory processors as computer peripherals", paru dans la revue IEEE Transaction on Neural Networks, vol. 4 pages 523 à 528, mai 1993. Dans ce cas, lorsqu'un neurone désire envoyer une impulsion, il présente une requête au système d'arbitrage qui vérifie si le bus de communication est libre et qui renvoie un signal d'autorisation d'émission au neurone. Si alors deux neurones veulent accéder en même temps au bus, le système d'arbitrage, grâce à un arbre d'arbitrage, choisit l'un des deux neurones et fait patienter l'autre. Mais si les collisions peuvent ainsi être évitées, c'est au prix d'une complexité notable des circuits. En effet, il faut prévoir des conducteurs de requête et d'autorisation pour chaque ligne et chaque colonne du réseau, ainsi qu'un arbre d'arbitrage pour les lignes et les colonnes, ce dont il résulte une complexité accrue du circuit. Par ailleurs, la vitesse de transmission s'en trouve considérablement réduite.

L'invention a pour but de fournir un dispositif de communication entre un réseau neuronal et un système utilisateur par l'intermédiaire d'un bus de transmission d'information qui ne complique pas les organes montés en amont et en aval du bus et qui permette grâce à un arbitrage perfectionné d'assurer une vitesse de transmission supérieure à qualité égale à celle pouvant être obtenue, avec un système fonctionnant sans arbitrage.

L'invention a donc pour objet un dispositif de communication présentant les caractéristiques de la revendication 1.

Grâce à ces caractéristiques, l'invention exploite pour la mise en oeuvre de l'arbitrage, la présence d'une impulsion sur la sortie du convertisseur correspondant au neurone actif au moment considéré pour bloquer le fonctionnement de tous les autres convertisseurs et ce tant que dure l'impulsion produite par ce neurone. Il en résulte un montage très simple qui ne nécessite qu'un minimum de composants simples, l'arbitrage restant par ailleurs parfaitement fiable.

Par ailleurs, il s'avère que la bande passante du bus de communication est nettement plus large.

D'autres caractéristiques avantageuses du dispositif de communication apparaissent dans les sous-revendications.

D'autres caractéristiques et avantages de l'invention apparaîtront au cours de la description qui va suivre, donnée uniquement à titre d'exemple et faite en se référant aux dessins annexés sur lesquels:
- la figure 1, déjà décrite, est un schéma simplifié d'un réseau de neurones auquel est associé un dispositif de communication de l'art antérieur, permettant de faire transiter l'information d'activité de ce réseau vers un système utilisateur à travers un bus de communication;
- la figure 2, également déjà décrite, est un diagramme temporel montrant la transmission de codes d'activité des neurones du réseau de la figure 1, sur un bus de transmission, et les risques de collision entre codes qu'une telle transmission peut impliquer;
- la figure 3 est un schéma global d'un réseau de neurones employant le dispositif de communication selon l'invention;
- la figure 3A montre les connexions et les circuits associés d'un neurone quelconque du réseau de la figure 3;
- les figures 4 à 6 montrent de façon très simplifiée, trois variantes de réalisation du dispositif de communication selon l'invention;
- la figure 7 montre de façon plus détaillée comment peut être utilisée la variante de l'invention représentée sur la figure 4;
- les figures 8 et 9 illustrent par des graphiques le fonctionnement des variantes respectives des figures 4 à 6; et
- la figure 10 est un diagramme illustrant le résultat que l'on peut obtenir grâce au dispositif de communication selon l'invention.

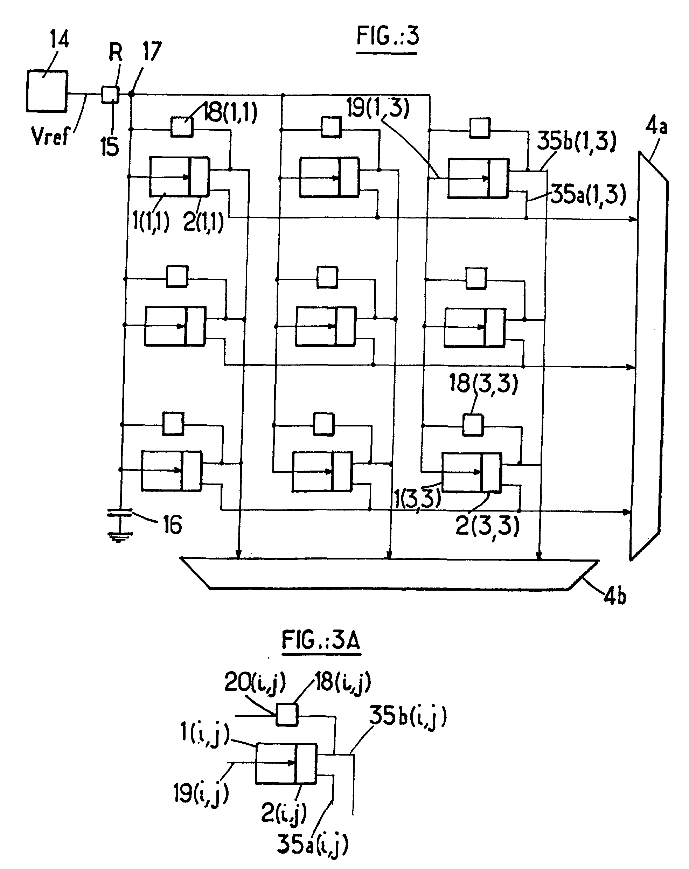

On va d'abord se référer à la figure 3 qui représente un schéma simplifié d'un dispositif de communication suivant l'invention.

Ce schéma, qui est semblable dans son principe à celui de la figure 1, correspond à titre d'exemple à une matrice de 3 X 3 neurones. Bien entendu, une telle matrice peut comporter un très grand nombre de neurones, connectés tous de la même façon, un neurone quelconque de coordonnées i, j dans la matrice étant reliée selon le schéma de détail de la figure 3A.

A chaque neurone 1 (i, j), délivrant un courant proportionnel à son activité, est associé un convertisseur courant/fréquence 2 (i, j), dont le signal de sortie est transmis à la fois à un codeur de ligne 4a et à un codeur de colonne 4b, via les liaisons 35a (i, j) et 35b (i, j), respectivement. Chaque codeur est connecté à un bus de communication (non représenté). Selon l'invention, des moyens sont prévus pour arbitrer l'accès aux bus de communication par les convertisseurs 2.

Ces moyens d'arbitrage comprennent tout d'abord des moyens de blocage connectés en commun à tous les convertisseurs 2 (i, j) pour leur transmettre une commande de blocage temporaire. Ces moyens de blocage comportent une source de tension 14 délivrant une tension continue V_{réf}. Cette source de tension est connectée à un diviseur de tension comprenant une résistance 15, elle-même raccordée à une capacité 16 qui est par ailleurs branchée à la masse. Cette capacité 16 peut être la capacité parasite du noeud 17 par rapport à la masse. Ce noeud 17 est connecté en commun aux sorties 20 (i, j) de circuits de commande d'inhibition 18 (i, j) associés respectivement à chacun des convertisseurs tension/fréquence 2(i, j).

Chaque circuit de commande d'inhibition 18 (i, j) est en outre relié à la sortie de son convertisseur associé pour qu'il puisse y détecter la présence d'une impulsion. Par ailleurs le noeud intermédiaire 17 est connecté à des bornes de blocage respectives 19 (i, j) des convertisseurs 2 (i, j).

Plus précisément, lorsqu'en raison de l'activité d'un neurone donné 1 (i, j), une impulsion apparaît à la sortie du convertisseur associé, le circuit de commande d'inhibition 18 (i, j) activera les moyens de blocage. Cela revient à ce qu'il modifie le potentiel du noeud 17 qui prendra alors une valeur telle sur les bornes de blocage 19 (i, j) des convertisseurs tension/fréquence que le fonctionnement de ceux-ci est suspendu, cependant que le fonctionnement du convertisseur correspondant au neurone actif reste maintenu.

Le changement d'état du potentiel du noeud 17 est donc perçu par tous les autres convertisseurs qui, dans ces conditions, ne produisent plus d'impulsions à leur sortie, quand bien même l'un des neurones est actif. La suspension du fonctionnement persiste tant que dure l'impulsion produite par le neurone qui est actif en premier.

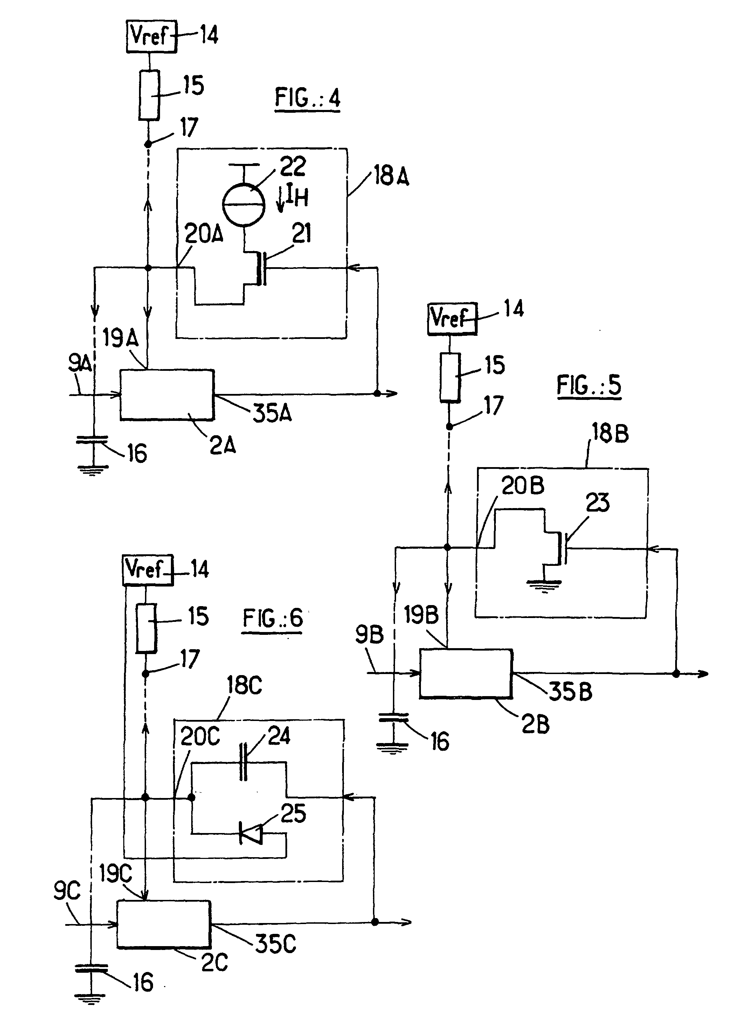

Les figures 4 à 6 représentent par un schéma de principe trois modes de réalisation différents du circuit de commande d'inhibition. Sur ces figures, des éléments équivalents ont été repérés par des références identiques suivies respectivement par les lettres A, B et C. Par ailleurs, on a repris certains autres éléments déjà représentés sur les figures 3 et 3A. En outre, pour simplifier, ces figures ne montrent qu'un seul convertisseur alors que, bien entendu tous les convertisseurs sont associés à leur propre circuit de commande d'inhibition agencé comme représenté respectivement sur les figures 4 à 6.

Sur la figure 4, la sortie du convertisseur tension/fréquence 2A est connectée à la grille d'un transistor 21 du circuit de commande d'inhibition 18A, le trajet source-drain de ce transistor étant relié entre une source de courant 22 et le noeud intermédiaire 17. Par conséquent, lorsque le transistor 21 est rendu conducteur par une impulsion produite par le convertisseur 2A (un neurone correspondant du réseau matriciel est actif), un courant I_{H} est injecté dans le noeud 17 ce qui modifie le potentiel sur les bornes de blocage 19A de tous les convertisseurs. Cette variation de potentiel est capable de bloquer les convertisseurs même si leurs neurones associés sont actifs à l'instant considéré, à l'exception de celui dont le neurone correspondant est actif.

Dans le cas de la figure 5, le circuit de commande d'inhibition 18B comporte un transistor 23 dont la grille est reliée à la sortie du convertisseur 2B et dont le trajet source-drain est connecté entre la masse et le noeud 17. Dans ce cas, le circuit de commande d'inhibition 18B permet donc de porter au potentiel de la masse les bornes de blocage de tous les convertisseurs, le fonctionnement du convertisseur dont le neurone est actif à l'instant considéré, n'étant pas influencé par l'état de sa borne de blocage.

Dans le cas de la figure 6, le circuit de commande d'inhibition 18C comprend une capacité 24 raccordée entre la sortie du convertisseur 2C et le noeud 17, ce dernier étant en outre relié à la sortie de la source de tension 14 par l'intermédiaire d'une diode 25. Dans ce cas, le noeud 17 suit la tension de charge du condensateur 24.

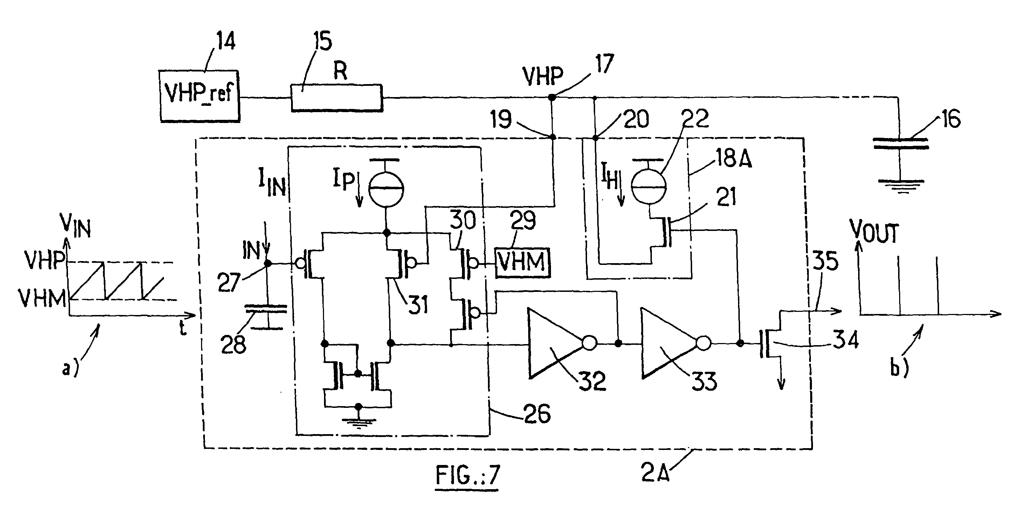

La figure 7 représente un exemple de réalisation d'un convertisseur courant/fréquence et de son circuit de commande d'inhibition associé pouvant plus particulièrement être utilisé dans la variante de la figure 4 pour remplir la fonction du bloc 2A en association avec le circuit de commande d'inhibition dans la version de la figure 4.

Ce convertisseur comporte une bascule de Schmitt 26 dont l'entrée 27 reçoit une tension Vᵢₙ d'un neurone du réseau. Cette entrée est raccordée à la masse par l'intermédiaire d'une capacité 28 qui peut être la capacité parasite de l'entrée 27 vis-à-vis de la masse. La bascule de Schmitt bascule entre deux tensions dites d'hystérèse VHP et VHM. La tension VHM est fixe et provient d'une source de référence 29. Elle est appliquée à la grille d'un transistor 30. L'autre tension d'hystérèse VHP de la bascule est appliquée à la borne de blocage 19 du convertisseur qui est en fait la grille d'un transistor 31.

La sortie de la bascule de Schmitt 26 est connectée à un jeu de deux inverseurs 32 et 33 montés l'un à la suite de l'autre. La sortie du second inverseur 33 est connectée au transistor 21 du circuit de commande d'inhibition 18A.

La sortie de l'inverseur 33 est également reliée à la grille d'un transistor 34 dont le trajet source-drain est relié entre la masse et une sortie 35 du convertisseur 2A.

La figure 7 montre également en a) une forme de la tension d'entrée V_{IN} de la bascule de Schmitt 26 et en b) la tension V_{OUT} fournie à la sortie 35.

Lorsqu'un neurone correspondant au convertisseur considéré 2A envoie un signal d'activité, une tension apparaît à l'entrée 27 de la bascule de Schmitt 26. Cette tension est intégrée par la capacité d'entrée 28 et elle peut évoluer jusqu'à ce qu'elle atteigne la valeur de la tension d'hystérèse VHP. Une impulsion est alors engendrée à la sortie 35 du convertisseur et le noeud d'entrée 27 est réinitialisé à la valeur de la tension VHM.

Cependant, l'émission d'une impulsion à la sortie 35 entraîne également la conduction du transistor 21 du circuit de commande d'inhibition 18A de sorte que la source de courant 22 peut maintenant charger le noeud 17 où règne la tension VHP. Ceci fait monter cette tension et ainsi la valeur de la tension d'hystérèse des autres convertisseurs raccordés aux autres neurones. Par conséquent, pour pouvoir basculer, les bascules de Schmitt de ces autres convertisseurs doivent recevoir une tension d'entrée d'une valeur désormais supérieure que la tension VHP initiale qui était égale à VHP_{ref} (la tension V_{ref} de la figure 3).

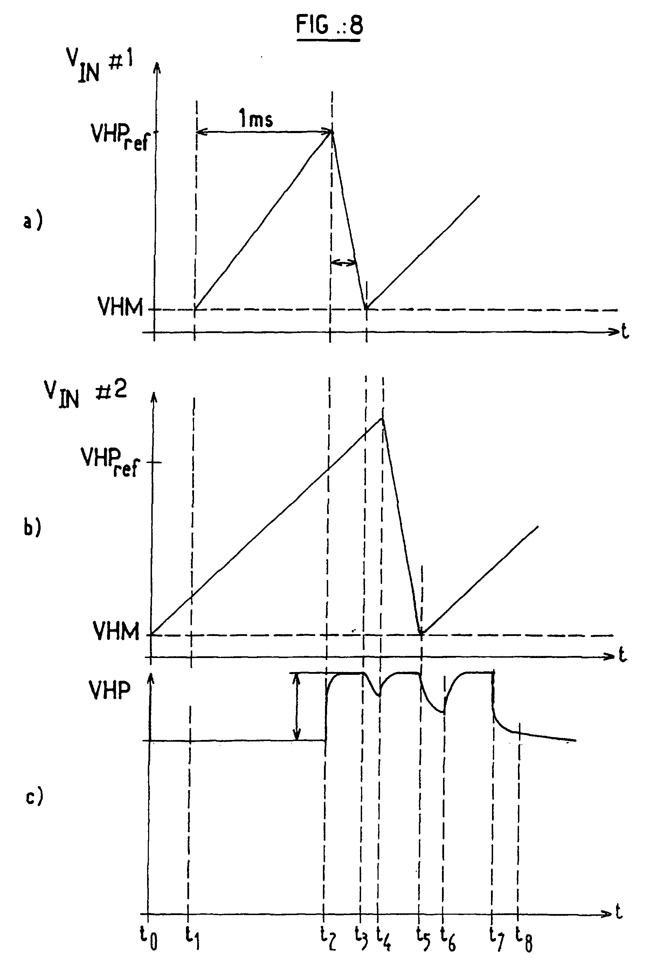

La figure 8 illustre graphiquement ce qui vient d'être décrit. Elle représente en a) la tension sur l'entrée d'un convertisseur quelconque 2 (i, j) de la figure 3A, ce convertisseur étant désigné désormais par 2A-N1 et que l'on suppose, pour l'exemple, être associé à un neurone appelé N1. La figure 8 représente en b) la tension d'entrée d'un autre des convertisseurs (désigné par 2A-N2) dont on appellera le neurone associé N2. On suppose aussi que les neurones N1 et N2 sont successivement actifs et que l'activité du neurone N1 est plus intense mais plus tardive que celle du neurone N2.

On notera également que ce diagramme temporel n'est pas à échelle constante, ceci pour faciliter la mise en évidence de l'évolution des tensions en fonction du temps. Ainsi, par exemple, l'intervalle entre les instants t1 et t2 peut durer 1 ms tandis que l'intervalle de temps entre t2 et t3 peut durer 50 ns seulement. D'une manière générale, la montée de la tension d'entrée d'un convertisseur est bien plus longue que sa descente, ceci à peu près dans les proportions que l'on vient d'indiquer.

Enfin, la figure 8 montre en c) l'évolution de la tension VHP sur le noeud 17 pour le cas où les activités des neurones N1 et N2 tels que définis ci-dessus coïncident partiellement dans le temps.

D'après les graphiques a) et b) de la figure 8, on voit que l'activité du neurone N2 commence à un instant donné t0 de sorte que la tension d'entrée V_{IN} du convertisseur 2A-N2 commence à croître à partir de la tension VHM de la bascule de Schmitt de ce convertisseur. A l'instant t1, le neurone N1 commence à son tour à manifester une activité de sorte que la tension d'entrée de son convertisseur 2A-N1 commence à croître à partir de la valeur de tension VHM. On voit que la pente de la tension du neurone N1 est plus raide que celle de la tension du neurone N2, ce qui signifie que le neurone N1 est "plus actif" que le neurone N2.

Toutefois, en l'absence des dispositions selon l'invention, les impulsions engendrés par les convertisseurs 2A-N1 et 2A-N2 se chevaucheraient au moins en partie et il en résulterait donc ce que l'on a appelé ci-dessus une "collision" qui rendrait impossible à transmettre sur le bus 5 les impulsions dues à l'activité quasi-simultanée des deux neurones.

Dans le cas de l'invention, cette "collision" ne peut avoir lieu, sauf si deux neurones commencent exactement en même temps leur activité avec une même intensité, une telle éventualité étant statistiquement rare.

Plus précisément, lorsque la tension d'entrée V_{IN} du neurone N1 atteint la valeur VHP_{ref} fournie par la source 14, valeur qui à cet instant est présente sur le noeud 17, la bascule de Schmitt 26 du convertisseur 2A-N1 bascule (temps t2). Ceci a pour conséquence qu'une impulsion apparaît à la sortie 35 de ce convertisseur rendant compte de l'activité du neurone. En second lieu, le transistor 21 du circuit de commande d'inhibition 18A du convertisseur 2A-N1 est rendu conducteur, ce qui provoque une augmentation de la tension du noeud 17, cette augmentation étant commune pour tous les convertisseurs du réseau de neurones. De ce fait, le niveau de basculement des bascules de Schmitt 26 de tous les convertisseurs à l'exception de celui du neurone N1 augmente comme on le voit représenté à partir de l'instant t2 dans le graphique c) de la figure 8. Il en résulte qu'aucune bascule de Schmitt dans les autres convertisseurs ne peut basculer quelle que soit l'activité du neurone associé. Dans l'exemple de la figure 8, ceci est le cas du convertisseur 2A-N2.

L'activité de ce dernier se poursuivant, la tension V_{IN} du convertisseur 2A-N2 continue à croître, cependant que la tension VHP du noeud 17 a baissé. A l'instant t4, cette tension d'entrée atteint la valeur actuelle de la tension VHP du noeud 17 de sorte qu'à cet instant la bascule de Schmitt 26 du convertisseur 2A-N2 commence à basculer. Ce basculement relève de nouveau le niveau de la tension VHP sur le noeud 17 interdisant désormais la production d'une impulsion de sortie de tous les autres convertisseurs.

La tension VHP est maintenue au niveau supérieur pendant la durée de l'impulsion de sortie du convertisseur 2A-N2 après quoi son niveau décroît de nouveau à partir de l'instant t5. On suppose encore qu'à partir de cet instant un autre neurone est actif jusqu'à l'instant t7 après quoi les neurones du réseau ne manifestent plus, pour un temps du moins, une activité. De ce fait, la tension VHP revient à la valeur de référence VHP_{ref}, aucun bloc d'inhibition n'étant actif à partir de l'instant t8.

Un fonctionnement semblable est obtenu, lorsque le circuit de commande d'inhibition 18B est utilisé conformément à la figure 5. Dans ce cas l'allure de la tension VHP sera un peu différente que celle représentée en c) sur la figure 8, en ce sens que sa valeur décroît de la valeur de référence VHP_{ref} à une valeur très inférieure, par exemple jusqu'à zéro, lorsqu'une impulsion est émise par un convertisseur.

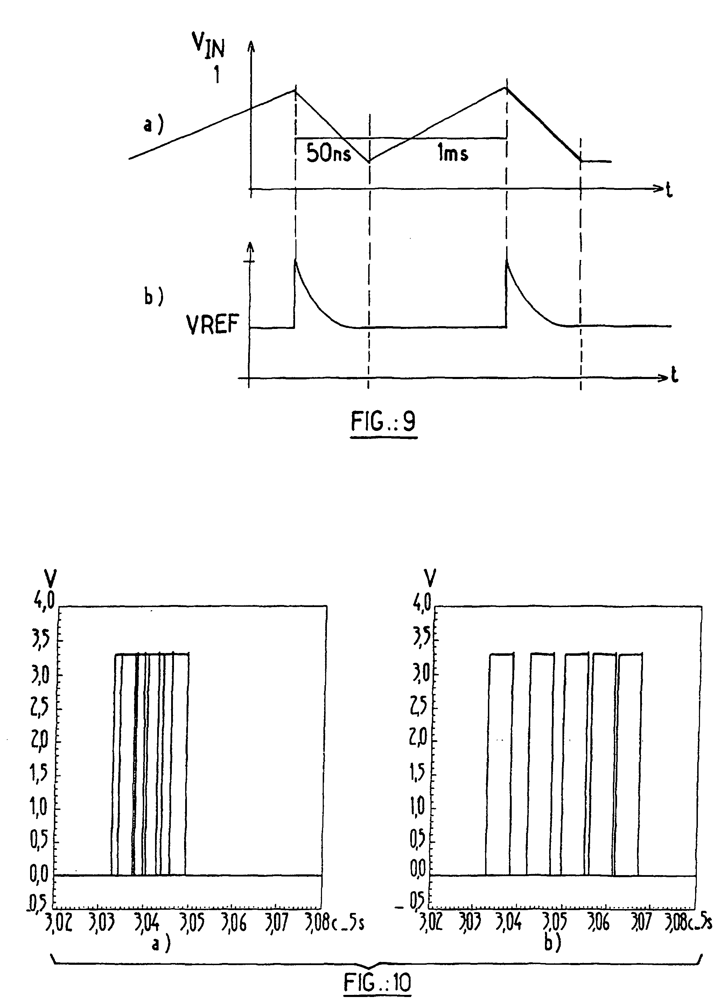

La figure 9 montre en a) l'allure de la tension d'entrée d'un convertisseur équipé d'un circuit de commande d'inhibition 18C conçu selon la figure 6. Dans ce cas, la tension du noeud 17 présente la forme représentée en b) sur la figure 9, en cas d'une activité sur le neurone considéré. Dans ce cas également, pour mettre en évidence la forme des tensions, l'échelle des temps n'est pas respectée.

La figure 10 montre les impulsions produites en même temps par cinq neurones d'une part dans un système (en a) dépourvu des dispositions selon l'invention et un système (en b) dans lequel les convertisseurs sont pourvus de moyens d'arbitrage conformes à l'une ou l'autre des variantes que l'on vient de décrire. On voit clairement que dans le second cas, les impulsions se présentent les unes après les autres en étant bien séparées dans le temps.

## Revendications

1. Dispositif de communication entre un réseau neuronal (1) composé de neurones connectés dans une matrice adressable et un système utilisateur (6) par l'intermédiaire d'un bus de transmission (5), ce dispositif comportant un convertisseur activité/fréquence par neurone (2 (i, j)) destiné à fournir sur sa sortie des impulsions dont la fréquence représente l'activité de ce neurone, les sorties des convertisseurs associés aux neurones de la matrice, étant connectées à un codeur (4) par l'intermédiaire duquel lesdites impulsions sont affectées d'un code binaire propre au neurone qui a provoqué leur production et ledit codeur (4) étant connecté audit bus (5) pour la transmission des codes ainsi produits vers ledit système utilisateur (6), ledit dispositif comprenant également des moyens d'arbitrage pour déterminer l'ordre de succession sur le bus de transmission (5) des différents codes produits par les neurones de ladite chaîne,
**caractérisé en ce que**
lesdits moyens d'arbitrage comprennent, pour chacun desdits convertisseurs , un circuit (18 (i, j)) de commande d'inhibition du fonctionnement de son convertisseur associé, ainsi que des moyens de blocage (14, 15, 16, 17) connectés en commun à tous les convertisseurs pour leur transmettre une commande de blocage temporaire, chaque circuit de commande d'inhibition étant agencé pour détecter la présence d'une impulsion à la sortie de son convertisseur associé et pour, pendant la présence d'une telle impulsion, activer lesdits moyens de blocage pour qu'ils transmettent aux autres convertisseurs, ladite commande de blocage temporaire de leur fonctionnement.

2. Dispositif de communication suivant la revendication 1, **caractérisé en ce que** lesdits moyens de blocage comprennent une source de tension de référence (14) connectée à un diviseur de tension (15, 16) présentant un noeud intermédiaire (17) connecté d'une part à chacun desdits circuits de commande et d'autre part à une entrée de blocage (19 (i, j)) de chacun desdits convertisseurs , **en ce que** chaque circuit de commande est agencé pour modifier le potentiel dudit noeud intermédiaire (17) pendant qu'une impulsion est présente sur la sortie du convertisseur qui lui est associé, la modification du potentiel, en activant lesdites entrées de blocage de tous les autres convertisseurs, empêchant la production d'une impulsion par ceux-ci.

3. Dispositif de communication suivant la revendication 2, **caractérisé en ce que** ledit diviseur de tension comprend le montage en série d'une résistance (15) et d'une capacité (16) dont le point commun forme ledit noeud intermédiaire (17), ledit montage en série étant raccordée entre ladite source de tension de référence (14) et la masse.

4. Dispositif de communication suivant la revendication 3, dans lequel chaque convertisseur comprend une bascule de Schmitt (26) à l'entrée (27) de laquelle est appliquée le signal d'activité (VIN) provenant du neurone connecté à ce convertisseur et dont la sortie (36) est connectée audit codeur (4), cette bascule (26) étant connectée à deux sources de tension d'hystérèse (VHP, VHM) entre lesquelles ledit signal d'activité (VIN) doit évoluer pour faire basculer la bascule (26) et déterminer ainsi la longueur et l'espacement desdites impulsions, ce dispositif étant **caractérisé en ce que** l'une des deux sources de tension d'hystérèse (VHM, VHP) est le noeud intermédiaire (17) dudit diviseur de tension.

5. Dispositif de communication suivant la revendication 4, **caractérisé en ce que** chaque circuit de commande d'inhibition (18A) comprend un transistor (21) dont la grille est connectée à ladite sortie (36A) du convertisseur (2A) associé, et dont le trajet source-drain est relié entre une source de courant (22) et ledit noeud intermédiaire (17).

6. Dispositif de communication suivant la revendication 4, **caractérisé en ce que** chaque circuit de commande d'inhibition (18B) comprend un transistor (21) dont la grille est connectée à ladite sortie (36B) du convertisseur (2B) associé, et dont le trajet source-drain est relié entre ledit noeud intermédiaire (17) dudit diviseur et la masse.

7. Dispositif de communication suivant la revendication 4, **caractérisé en ce que** chaque circuit de commande d'inhibition (18C) comprend une capacité (24) montée entre ladite sortie (36C) du convertisseur et ledit noeud intermédiaire (17), et une diode (25) connectée entre ladite source de tension de référence et ledit noeud intermédiaire (17) du diviseur.

## Patentansprüche

1. Kommunikationsvorrichtung zwischen einem aus in einer adressierbaren Matrix verbundenen Neuronen zusammengesetzten Neuronennetz (1) und einem Nutzungssystem (6) durch einen Übertragungsbus (5), wobei diese Vorrichtung einen Aktivitäts- / Frequenzumwandler je Neuron (2 (i, j)) umfasst, der dazu bestimmt ist, auf seinem Ausgang Impulse zu liefern, deren Frequenz die Aktivität dieses Neurons darstellt, wobei die Ausgänge der den Neuronen der Matrix zugeordneten Umwandler an einen Codierer (4) angeschlossen sind, durch den die besagten Impulse einem dem Neuron zugehörigen binären Code zugeordnet werden, der ihre Produktion hervorgerufen hat, und wobei der besagte Codierer (4) für die Übertragung der auf diese Weise hergestellten Codes zum Nutzungssystem (6) an den besagten Bus (5) angeschlossen ist, wobei die besagte Vorrichtung ebenfalls Schlichtungsmittel zur Bestimmung der Reihenfolge der verschiedenen von den Neuronen der besagten Kette produzierten Codes auf dem Übertragungsbus (5) umfasst,
**dadurch gekennzeichnet, dass**
die besagten Schlichtungsmittel für jeden der besagten Umwandler einen Steuerschaltkreis (18 (i, j)) zur Verhinderung der Funktion seines zugeordneten Umwandlers sowie Blockiermittel (14, 15, 16, 17) umfasst, die gemeinsam an alle Umwandler angeschlossen sind, um ihnen einen temporären Blockierbefehl zu übertragen, wobei jeder Schaltkreis zur Verhinderung angeordnet ist, um das Vorhandensein eines Impulses am Ausgang seines zugeordneten Umwandlers festzustellen und um während des Vorhandenseins eines derartigen Impulses die besagten Blockiermittel zu aktivieren, damit sie den besagten temporären Blockierbefehl ihrer Funktion an die anderen Umwandler übertragen.

2. Kommunikationsvorrichtung gemäß Anspruch 1, **dadurch gekennzeichnet, dass** die besagten Blockiermittel eine Referenzspannungsquelle (14) umfassen, die an einen Spannungsteiler (15, 16) angeschlossen ist, der einen zwischengeschalteten Knotenpunkt (17) aufweist, der einerseits an jeden der besagten Steuerschaltkreise angeschlossen ist und andererseits an einen Blockiereingang (19, (i, j)) jeder der besagten Umwandler, dass jeder Steuerschaltkreis angeordnet ist, um das Potenzial des besagten zwischengeschalteten Knotenpunktes (17) zu ändern, während ein Impuls am Ausgang des ihm zugeordneten Umwandlers vorhanden ist, wobei die Änderung des Potenzials bei Aktivierung der besagten Blockiereingänge aller anderen Umwandler die Produktion eines Impulses durch diese verhindert.

3. Kommunikationsvorrichtung gemäß Anspruch 2, **dadurch gekennzeichnet, dass** der besagte Spannungsteiler die Reihenschaltung aus einem Widerstand (15) und einer Kapazität (16) umfasst, deren gemeinsamer Punkt den besagten zwischengeschalteten Knotenpunkt (17) bildet, wobei die Reihenschaltung zwischen der besagten Referenzspannungsquelle (14) und der Masse angeschlossen ist.

4. Kommunikationsvorrichtung gemäß Anspruch 3, in der jeder Umwandler einen Schmitt-Trigger (26) umfasst, dessen Eingang (27) mit dem aus dem an diesen Umwandler angeschlossenen Neuron stammenden Aktivitätssignal (V_{IN}) beaufschlagt wird und dessen Ausgang (36) an den besagten Codierer (4) angeschlossen ist, wobei dieser Trigger (26) an zwei Hysteresespannungsquellen (VHP, VHM) angeschlossen ist, zwischen denen sich das besagte Aktivitätssignal (V_{IN}) entwickeln muss, um den Trigger (26) zu kippen und somit die Länge und den Abstand der besagten Impulse zu bestimmen, wobei diese Vorrichtung **dadurch gekennzeichnet ist, dass** eine der zwei Hysteresespannungsquellen (VHM, VHP) der zwischengeschaltete Knoten (17) des besagten Spannungsteilers ist.

5. Kommunikationsvorrichtung gemäß Anspruch 4, **dadurch gekennzeichnet, dass** jede Steuerschaltung zur Verhinderung (18A) einen Transistor (21) umfasst, dessen Gitter an den besagten Ausgang (36A) des zugeordneten Umwandlers (2A) angeschlossen ist und dessen Laufbahn Quelle - Drain zwischen einer Stromquelle (22) und dem besagten zwischengeschalteten Knotenpunkt (17) verbunden ist.

6. Kommunikationsvorrichtung gemäß Anspruch 4, **dadurch gekennzeichnet, dass** jeder Steuerschaltkreis zur Verhinderung (18B) einen Transistor (21) umfasst, dessen Gitter an den besagten Ausgang (36B) des zugeordneten Umwandlers (2B) angeschlossen ist, und dessen Laufbahn Quelle - Drain zwischen dem besagten zwischengeschalteten Knotenpunkt (17) des besagten Teilers und der Masse verbunden ist.

7. Kommunikationsvorrichtung gemäß Anspruch 4, **dadurch gekennzeichnet, dass** jeder Steuerschaltkreis zur Verhinderung (18C) eine Kapazität (24) umfasst, die zwischen dem besagten Ausgang (36C) des Umwandlers und dem besagten zwischengeschalteten Knotenpunkt (17) angebracht ist, und eine Diode (25), die zwischen der besagten Referenzspannungsquelle und dem besagten zwischengeschalteten Knotenpunkt (17) des Teilers angeschlossen ist.

## Claims

1. Apparatus for communication via a transmission bus (5) between a user system (6) and a neural network (1) made of up of neurones connected in an addressable matrix, said device including an activity/frequency converter for each neurone (2 (i, j)) adapted to provide at its output pulses whose frequency represents the activity of said neurone, the outputs of said converters associated with said neurones of said matrix being connected to an encoder (4) by which said pulses are allocated a binary code specific to the neurone that caused them to be produced and said encoder (4) being connected to said bus (5) for transmitting said codes to said user system (6), said device also including arbitration means for determining the order of succession on said transmission bus (5) of the various codes produced by said neurones of said network,
**characterized in that** said arbitration means comprising, for each of said converters, a circuit (18 (i, j)) for controlling inhibition of operation of its associated converter and blocking means (14, 15, 16, 17) connected in common to all said converters to transmit to them a temporary blocking command, each inhibition control circuit being adapted to detect the presence of a pulse at the output of its associated converter and, while any such pulse is present, to activate said blocking means so that they transmit to the other converters said command temporarily blocking their operation.

2. Communication apparatus as claimed in claim 1, **characterized in that** said blocking means comprise a reference voltage source (14) connected to a voltage divider (15, 16) having an intermediate node (17) connected to each control circuit and to a blocking input (19 (i, j)) of each converter, and **in that** each control circuit is adapted to modify the potential of said intermediate node (17) while a pulse is present at the output of the associated converter, the modification of the potential, by activating said blocking inputs of all the other converters, preventing the production of any pulse thereby.

3. Communication apparatus as claimed in claim 2, **characterized in that** said voltage divider comprises the series-connected combination of a resistor (15) and a capacitor (16) the common point of which forms said intermediate node (17) and **in that** said series-connected circuit is connected between said reference voltage source (14) and ground.

4. Communication apparatus as claimed in claim 3, wherein each converter comprises a Schmitt trigger (26) to whose input (27) the activity signal (V_{IN}) from the neurone connected to that converter is applied and whose output (36) is connected to said encoder (4), said trigger (26) being connected to two hysteresis voltage sources (VHP, VHM) between which hysteresis voltages said activity signal (V_{IN}) must evolve to cause said trigger (26) to change state and thereby determine the length and the spacing of said pulses, said apparatus being **characterized in that** one of said hysteresis voltage sources (VHM, VHP) is said intermediate node (17) of said voltage divider.

5. Communication apparatus as claimed in claim 4, **characterized in that** each inhibition control circuit (18A) comprises a transistor (21) whose gate is connected to said output (36A) of the associated converter (2A) and whose source-drain path is connected between a current source (22) and said intermediate node (17).

6. Communication apparatus as claimed in claim 4, **characterized in that** each inhibition control circuit (18B) comprises a transistor (21) whose gate is connected to said output (36B) of the associated converter (2B) and whose source-drain path is connected between said intermediate node (17) of said divider and ground.

7. Communication apparatus as claimed in claim 4, **characterized in that** each inhibition control circuit (18C) comprises a capacitor (24) connected between said output (36C) of said converter and said intermediate node (17) and a diode (25) connected between said reference voltage source and said intermediate node (17) of said divider.
